# EUROPEAN PATENT APPLICATION

(11) **EP 4 838 294 A1**
(43) Date of publication of application: **11.11.2026**
(21) Application number: 24919188.3
(22) Date of filing: 22.01.2024
(51) Int. Cl.: G02F 1/1362

(54) **ARRAY SUBSTRATE, DISPLAY PANEL AND DISPLAY DEVICE**

(71) Applicant: Boe Technology Group Co., Ltd., Beijing 100015 (CN); Fuzhou Boe Optoelectronics Technology Co., Ltd., Fuzhou, Fujian 350300 (CN); Beijing BOE Technology Development Co., Ltd., Daxing District Beijing 100176 (CN)
(72) Inventor: FENG, Bo, Beijing 100176 (CN); SAI, Jiazuo, Beijing 100176 (CN); DIAO, Kai, Beijing 100176 (CN); LIU, Jiantao, Beijing 100176 (CN); ZHOU, Qingen, Beijing 100176 (CN); CHEN, Ming, Beijing 100176 (CN); ZHANG, Han, Beijing 100176 (CN); ZHAO, Hongyu, Beijing 100176 (CN)
(74) Representative: Brötz, Helmut
(86) International application number: PCT/CN2024/073420
(87) International publication number: WO 2025/156069

(57) **Abstract**

Provided are an array substrate, a display panel and a display device. The array substrate comprises a base substrate, a plurality of data lines, a plurality of thin film transistors, a common electrode, a plurality of pixel electrodes and an insulating layer, wherein the orthographic projections of the plurality of data lines on the base substrate completely fall within the orthographic projection of the common electrode on the base substrate; the common electrode comprises a plurality of opening portions; the plurality of opening portions correspond to the plurality of thin film transistors on a one-to-one basis; each opening portion comprises a first opening and a second opening; the first opening is configured to expose a portion of one thin film transistor; the second opening is configured to expose a connecting via hole; the orthographic projections of the first openings and the orthographic projections of the second openings along a straight line extending in a second direction overlap each other; and in the second direction, the size of the first openings is smaller than that of the second openings. The array substrate can effectively mitigate a light leakage phenomenon, and the parasitic capacitance between the thin film transistors and a driving electric field is relatively small, such that the quality of a display image is good.

## Description

### TECHNICAL FIELD

At least one embodiment of the present disclosure relates to an array substrate, a display panel, and a display device.

### BACKGROUND

With the development of technology, We-Media and film and television professionals have increasingly higher demands for the image quality of display products. The contrast of display products is continuously improving, for example, the contrast ratio (CR) of some display products can reach 1000:1 to 3000:1. At present, the display products of various sizes are trending towards higher contrast ratio. How to improve the contrast ratio of the display products while meeting size requirements to achieve good image quality has become a problem that researchers in the display field need to continuously tackle.

### SUMMARY

At least one embodiment of the present disclosure provides an array substrate, a display panel, and a display device.

At least one embodiment of the present disclosure provides an array substrate, including: a base substrate, a plurality of data lines, a plurality of thin film transistors, a common electrode, a plurality of pixel electrodes and an insulating layer, the plurality of data lines are located on the base substrate and arranged along a first direction; the plurality of thin film transistors are located on the base substrate and arranged in an array along the first direction and a second direction, wherein each of the plurality of thin film transistors includes a first electrode, a second electrode, and a gate electrode, the first electrode is electrically connected to a data line of the plurality of data lines, both the first direction and the second direction are parallel to the base substrate, and the first direction intersects the second direction; the common electrode is located on a side of the plurality of data lines and the plurality of thin film transistors away from the base substrate; the plurality of pixel electrodes are located on a side of the common electrode away from the base substrate and each configured to form an electric field with the common electrode; the insulating layer is located between the common electrode and the plurality of thin film transistors, the plurality of pixel electrodes are each electrically connected to the second electrode through a connecting via hole in the insulating layer; wherein orthographic projections of the plurality of data lines on the base substrate are completely within an orthographic projection of the common electrode on the base substrate; the common electrode includes a plurality of opening portions; the plurality of opening portions are disposed in one-to-one correspondence with the plurality of thin film transistors; each of the plurality of opening portions include a first opening and a second opening; the first opening is configured to expose a part of a thin film transistor; the second opening is configured to expose the connecting via hole; orthographic projections of the first opening and the second opening on a straight line that extends along the second direction are overlapped with each other; and in the second direction, a size of the first opening is smaller than a size of the second opening.

For example, in the array substrate according to at least one embodiment of the disclosure, the first electrode includes a first portion and a second portion connected to each other; the first portion is exposed by the first opening; and the second portion is covered by the common electrode.

For example, in the array substrate according to at least one embodiment of the disclosure, the first portion is located between the second portion and the second electrode; an orthographic projection of the first portion on the base substrate is in a ring shape that is non-closed; and at least a part of an orthographic projection of the second electrode on the base substrate is located in an area surrounded by the ring shape; an average width of the ring shape is D1, and D1=f²+h²+m²+n²; wherein f represents a fluctuation value of the first opening, h represents a fluctuation value of the first electrode, m represents an alignment deviation of the first opening, and n represents an alignment deviation of the first electrode.

For example, in the array substrate according to at least one embodiment of the disclosure, the fluctuation value f of the first opening and the fluctuation value h of the first electrode are both 0.5 µm to 5 µm; the alignment deviation m of the first opening and the alignment deviation n of the first electrode are both 1.0 µm to 3.5 µm; and the average width D1 of the ring shape is 1.7 µm to 4.2 µm.

For example, in the array substrate according to at least one embodiment of the disclosure, an area of an orthographic projection of the first portion on the base substrate is smaller than an area of an orthographic projection of the second portion on the base substrate.

For example, in the array substrate according to at least one embodiment of the disclosure, the area of the orthographic projection of the first portion on the base substrate is 20% to 50% of the area of the orthographic projection of the second portion on the base substrate.

For example, in the array substrate according to at least one embodiment of the disclosure, the first portion includes a first sub-portion, a second sub-portion, and a third sub-portion; the first sub-portion and the second sub-portion are oppositely arranged in the second direction, the third sub-portion is located between the first sub-portion and the second sub-portion, and the first sub-portion and the second sub-portion are connected through the third sub-portion; and a size of the first sub-portion in the second direction, and/or a size of the second sub-portion in the second direction is smaller than a size of the third sub-portion in the first direction.

For example, in the array substrate according to at least one embodiment of the disclosure, the first portion of the first electrode extends along the second direction; and portions of the first electrode on two sides of the second electrode in the second direction are covered by the common electrode.

For example, in the array substrate according to at least one embodiment of the disclosure, each of the plurality of thin film transistors further includes an active pattern; the active pattern is connected to the first electrode and the second electrode respectively, and is at least partially overlapped with the gate electrode; wherein the active pattern includes a third portion and a fourth portion connected to each other, the third portion is exposed by the first opening; and the fourth portion is covered by the common electrode.

For example, in the array substrate according to at least one embodiment of the disclosure, the fourth portion includes a first edge portion and a second edge portion; the first edge portion and the second edge portion are opposite to each other in the second direction and are arranged at intervals; and the third portion is located between the first edge portion and the second edge portion; and a size of the first edge portion in the second direction and a size of the second edge portion in the second direction are both smaller than a size of the third portion in the second direction.

For example, in the array substrate according to at least one embodiment of the disclosure, wherein in the first direction, the active pattern includes a first edge away from the second electrode; the first electrode includes a second edge away from the second electrode; the gate electrode includes a third edge away from the second electrode; the third edge extends beyond the second edge of the first electrode; and the second edge extends beyond the first edge of the active pattern.

For example, in the array substrate according to at least one embodiment of the disclosure, a size of the second edge extending beyond the first edge is E, and E=r²+h²+t²+n²; and r represents a fluctuation value of the active pattern, h represents a fluctuation value of the first electrode, t represents an alignment deviation of the active pattern, and n represents an alignment deviation of the first electrode.

For example, in the array substrate according to at least one embodiment of the disclosure, the data line extends in the second direction and is electrically connected to the second portion of the first electrode; the data line, the first electrode, and the second electrode are arranged at the same layer; and the data line and the first electrode are of an integrated structure.

For example, in the array substrate according to at least one embodiment of the disclosure, the array substrate further includes an electrode pattern, wherein the electrode pattern is located on a side of the common electrode away from the thin film transistors and is electrically connected to the common electrode; the electrode pattern includes a plurality of first pattern portions and a plurality of second pattern portions; the plurality of first pattern portions extend in the first direction, the plurality of second pattern portions extend in the second direction, the plurality of first pattern portions are arranged at intervals in the second direction, and adjacent first pattern portions of the plurality of first pattern portions are electrically connected through the second pattern portions; and at least a part of an orthographic projection of the second pattern portions on the base substrate is located outside an orthographic projection of the data lines on the base substrate.

For example, in the array substrate according to at least one embodiment of the disclosure, the array substrate further includes a plurality of gate lines, wherein the plurality of gate lines extend along the first direction, and are arranged at intervals along the second direction, and the plurality of gate lines are each electrically connected to the gate electrode of a corresponding thin film transistor; and at least a part of an orthographic projection of the first pattern portions on the base substrate is located outside an orthographic projection of the gate lines on the base substrate.

For example, in the array substrate according to at least one embodiment of the disclosure, in the second direction, the second opening is farther away from a gate line to which the thin film transistor exposed by the first opening is connected than the first opening; and the second opening and the gate line are arranged at intervals.

For example, in the array substrate according to at least one embodiment of the disclosure, the second electrode includes an extending portion which extends along the first direction, and the extending portion extends into an area surrounded by the ring shape; the extending portion includes a first extending sub-portion and a second extending sub-portion; the first extending sub-portion is exposed by the first opening, the first extending sub-portion is closer to the first electrode than the second extending sub-portion, and an orthographic projection of the first extending sub-portion on the base substrate is within an orthographic projection of the active pattern on the base substrate; and in the second direction, a size of the first extending sub-portion is smaller than a size of the second extending sub-portion.

For example, in the array substrate according to at least one embodiment of the disclosure, the second extending sub-portion of the second electrode includes a body portion and at least one protruding portion; the at least one protruding portion is connected to the body portion, and protruded relative to the body portion in the first direction.

For example, in the array substrate according to at least one embodiment of the disclosure, the second extending sub-portion includes two protruding portions which are respectively located on two sides of the body portion; an interval is existed between an orthographic projection of each of the two protruding portions on a plane and an orthographic projection of the first electrode on the plane, and the plane is perpendicular to the second direction.

For example, in the array substrate according to at least one embodiment of the disclosure, a minimum distance between the connecting via hole and the second opening is D2, and D2=y²+e²+s²+g²; and y represents a fluctuation value of the second opening, h represents a fluctuation value of the connecting via hole, s represents an alignment deviation of the second opening, and g represents an alignment deviation of the connecting via hole.

For example, in the array substrate according to at least one embodiment of the disclosure, the minimum distance D2 between the connecting via hole and the second opening is 1.7 µm to 4.2 µm.

For example, in the array substrate according to at least one embodiment of the disclosure, an area of an orthographic projection of the first opening on the base substrate is larger than an area of an orthographic projection of the second opening on the base substrate.

For example, in the array substrate according to at least one embodiment of the disclosure, the first opening and the second opening are in communication with each other, and are arranged in the first direction.

At least one embodiment of the present disclosure provides a display panel, including the array substrate according to any one of the above embodiments.

At least one embodiment of the present disclosure provides a display device, including the display panel according to any one of the above embodiments.

### BRIEF DESCRIPTION OF DRAWINGS

In order to clearly illustrate the technical solution of the embodiments of the present disclosure, the drawings of the embodiments will be briefly described. It is obvious that the described drawings in the following are only related to some embodiments of the present disclosure and thus are not limitative of the present disclosure.
FIG. 1 is a schematic structural diagram of an array substrate.
FIG. 2 is a schematic structural diagram of an array substrate provided by at least one embodiment of the present disclosure.
FIG. 3A is an enlarged schematic diagram of a partial structure of an array substrate in FIG. 2.
FIG. 3B is an enlarged schematic diagram of a partial structure of an array substrate in FIG. 3A.
FIG. 4 is a schematic structural diagram of an opening portion in an array substrate provided by at least one embodiment of the present disclosure.
FIG. 5 is a schematic diagram of a partial structure of an array substrate provided by at least one embodiment of the present disclosure.
FIG. 6A is a schematic cross-sectional view of some array substrates.
FIG. 6B is a schematic cross-sectional diagram of an array substrate provided by at least one embodiment of the present disclosure.
FIG. 7 to FIG. 12 are schematic diagrams of laminated structures in an array substrate provided by at least one embodiment of the present disclosure.
FIG. 13 is a schematic structural diagram of a second electrode provided by at least one embodiment of the present disclosure.
FIG. 14 is a schematic cross-sectional diagram of an array substrate provided by at least one embodiment of the present disclosure.
FIG. 15 is a schematic structural diagram of a display panel provided by at least one embodiment of the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., used in the present disclosure are not intended to indicate any sequence, amount or importance, but distinguish different components. The terms "comprise," "comprising," "include," "including," etc., are intended to specify that the elements or the objects stated before these terms encompass the elements or the objects and equivalents thereof listed after these terms, but do not preclude the other elements or objects.

In the embodiments of the present disclosure, features such as "vertical", "parallel", and "the same" include not only strictly "vertical", "parallel", and "the same" features, but also situations with certain deviations, such as "substantially vertical", "substantially parallel", and "substantially the same". Taking into account the measurement and the errors associated with measuring a specific quantity (that is, the limitations of a measurement system), these terms indicate a deviation within a range acceptable to those skilled in the art for a given value. The term "center" in the embodiments of the present disclosure may include both a position strictly at a geometric center and a position approximately at the center within a small area around the geometric center.

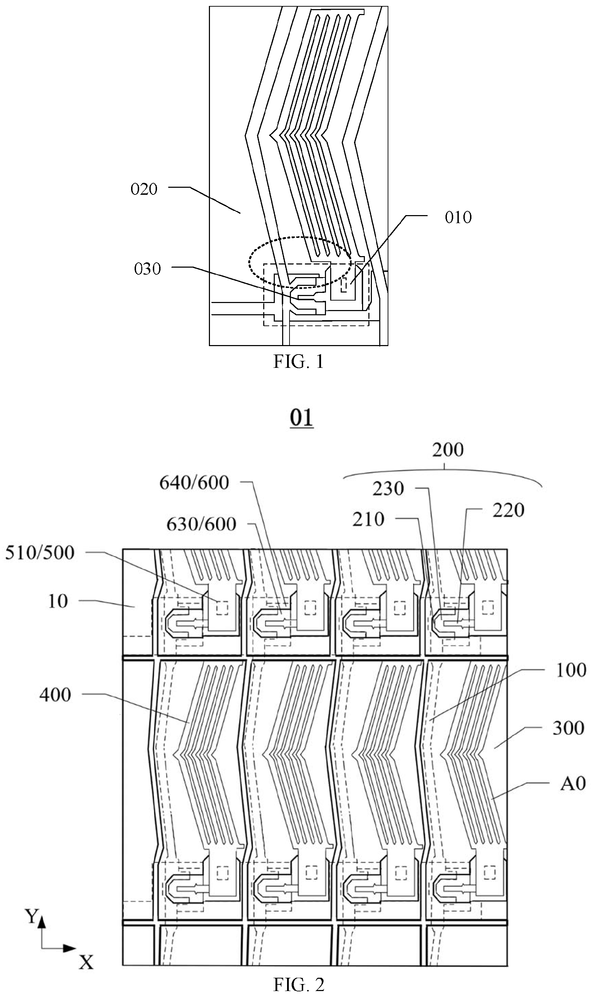

FIG. 1 is a schematic structural diagram of an array substrate.

At present, display products are gradually evolving towards higher contrast ratio and better image quality. With the rapid transmission of information over the Internet, users are becoming more knowledgeable about the display industry and are paying more attention to their own visual experience.

However, in the study, the inventors of this application found that, as shown in FIG. 1, for a display product (such as a liquid crystal display product), a display panel typically includes an array substrate and an opposite base substrate that are disposed facing each other; and the array substrate may be provided with a pixel electrode 010 and a common electrode 020. An electric field can be formed between the pixel electrode 010 and the common electrode 020 to drive liquid crystal molecules located between the array substrate and the opposite base substrate to rotate, thereby achieving display. During the display process of the display panel, an area (with reference to an oval dashed area in FIG. 1) between a pixel circuit (for example, a thin film transistor 030) and the pixel electrode 010 is prone to light leakage, and even when displaying a pure black image (i.e., in dark state display), the light leakage phenomenon remains quite severe, which results in the contrast ratio of the display image being compromised and affects the quality of the display image. Meanwhile, parasitic capacitance between the pixel electrode 010 and the common electrode 020 in the array substrate is also an important factor affecting image quality. For example, as shown in FIG. 1, a rectangular dashed area is an opening area of the common electrode 020, which exposes the thin film transistor 030; and when the pixel electrode 010 is exposed by the common electrode 020, the parasitic capacitance can be reduced; however, if the common electrode 020 has an excessively large opening, it will exacerbate light leakage, which is detrimental to display.

Therefore, it is urgently necessary to alleviate the parasitic capacitance between the pixel circuit and the common electrode, while reducing light leakage in the array substrate, so as to enhance the display contrast ratio and optimize image quality.

At least one embodiment of the present disclosure provides an array substrate, a display panel, and a display device.

The array substrate provided by the at least one embodiment of the present disclosure includes a base substrate, a plurality of data lines, a plurality of thin film transistors, a common electrode, a plurality of pixel electrodes, and an insulating layer; the plurality of data lines are located on the base substrate and arranged along a first direction; the plurality of thin film transistors are located on the base substrate and are arranged in an array along the first direction and a second direction; each thin film transistor includes a first electrode, a second electrode, and a gate electrode; the first electrode is electrically connected to a data line; both the first direction and the second direction are parallel to the base substrate, and the first direction and the second direction are intersected; the common electrode is located on a side of the data lines and the thin film transistors away from the base substrate; the plurality of pixel electrodes are located on the side of the common electrode away from the base substrate and are configured to form an electric field with the common electrode; the insulating layer is located between the common electrode and the thin film transistors; the pixel electrodes are electrically connected to the second electrodes through connecting via holes in the insulating layer; orthographic projections of the plurality of data lines on the base substrate are completely within orthographic projection of the common electrode on the base substrate; the common electrode includes a plurality of opening portions; the plurality of opening portions correspond to the plurality of thin film transistors in one to one correspondence; each opening portion includes a first opening and a second opening; the first opening is configured to expose a part of the thin film transistor; the second opening is configured to expose the corresponding connecting via hole; orthographic projections of the first opening and the second opening on a straight line that extends along the second direction are overlapped with each other; and the size of the first opening is smaller than the size of the second opening in the second direction.

According to the array substrate provided by the embodiment of the present disclosure, the common electrode is provided with the first opening and the second opening which are different in size in the second direction, so that on one hand, the structure in the pixel circuit can be effectively covered by the common electrode, which can reduce the interference of the common electrode on the pixel electrode, thereby reducing the light leakage phenomenon caused by the interference on the electric field, and further improving the quality of the display image; and on the other hand, a part of structure (such as a first electrode, and a channel region) of the thin film transistor is exposed through the first opening, so that the parasitic capacitance between the part of structure of the thin film transistor and the common electrode can be reduced, and thus the influence on the electric field formed between the common electrode and the pixel electrode is reduced to optimize the display performance.

The array substrate, the display panel, and the display device provided by the embodiments of the present disclosure are described below in cooperation with the accompanying drawings.

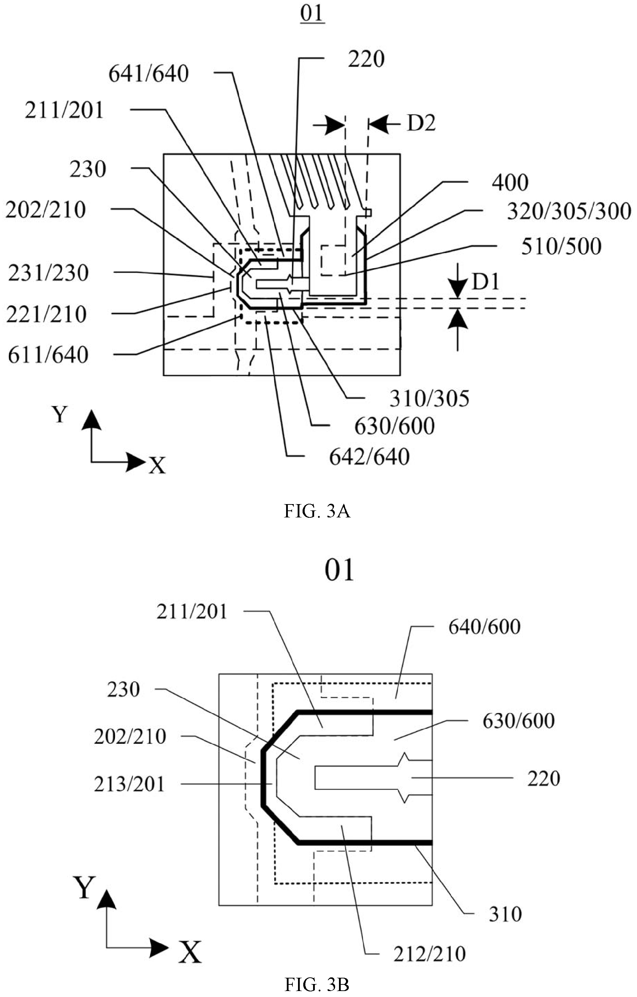

FIG. 2 is a schematic structural diagram of an array substrate provided by at least one embodiment of the present disclosure; FIG. 3A is an enlarged schematic diagram of a partial structure of an array substrate in FIG. 2; and FIG. 3B is an enlarged schematic diagram of a partial structure of an array substrate in FIG. 3A.

As shown in FIG. 2, the array substrate 01 includes a base substrate 10, and a plurality of data lines 100, a plurality of thin film transistors 200, a common electrode 300, a plurality of pixel electrodes 400 and an insulating layer 500 which are located on the base substrate 10. For example, the array substrate 01 may include a plurality of sub-pixels, and each sub-pixel includes a thin film transistor 200. The plurality of thin film transistors 200 in the array substrate 01 are arranged in an array along a first direction X and a second direction Y, for example, the plurality of thin film transistors 200 may be arranged into a plurality of thin film transistor rows and a plurality of thin film transistor columns.

As shown in FIG. 2, each thin film transistor 200 includes a first electrode 210, a second electrode 220, and a gate electrode 230. For example, the first electrode 210 may be a source electrode, the second electrode 220 may be a drain electrode, but the disclosure is not limited thereto. The first electrode 210 and the second electrode 220 are only relative terms, and their names can be interchanged. For example, one of the first electrode 210 and the second electrode 220 of the thin film transistor 200 may be the source electrode, and the other one of the first electrode 210 and the second electrode 220 may be the drain electrode, and the gate electrode 230 of the thin film transistor 200 may be called a control electrode. As shown in FIG. 2, the plurality of data lines 100 are arranged along the first direction X. The first electrodes 210 are electrically connected to the data lines 100 to receive data signals from the data lines 100.

As shown in FIG. 2, the common electrode 300 is located on a side of the data line 100 away from a base substrate 10 and is located on the side of the thin film transistor 200 away from the base substrate 10. For example, the common electrode 300 can receive a common voltage signal. The plurality of pixel electrodes 400 are located on the side of the common electrode 300 away from the base substrate 10 and are configured to form an electric field with the common electrode 300. For example, a liquid crystal layer (not shown in the figure) can be arranged on a side of the array substrate 10, and the electric field (hereinafter referred to as a driving electric field) formed between the common electrode 300 and the pixel electrode 400 can drive the liquid crystal molecules in the liquid crystal layer to deflect for display. In a direction perpendicular to the base substrate 10, the insulating layer 500 is located between the common electrode 300 and the pixel electrodes 400, and the pixel electrodes 400 are electrically connected to the second electrodes 220 through connecting via holes 510 in the insulating layer 500.

As shown in FIG. 2, the common electrode 300 may be an integrated structure, for example, the common electrode 300 may be arranged in a full-surface configuration, so that the orthographic projections of the plurality of data lines 100 on the base substrate 10 may be completely within the orthographic projection of the common electrode 300 on the base substrate 10, and therefore a shielding effect can be achieved on signals of the data lines 100, so as to reduce the influence of the data lines 100 on the driving electric field.

As shown in FIG. 2, FIG. 3A, and FIG. 3B, the common electrode 300 includes a plurality of opening portions 305, and the opening portions 305 are in one to one correspondence with the plurality of thin film transistors 200. Each opening portion 305 includes a first opening 310 and a second opening 320; the first opening 310 is configured to expose a part of the thin film transistor 200, and therefore the parasitic capacitance between the thin film transistor 200 and the common electrode 300 can be reduced, and the influence on the driving electric field can be reduced. The second opening 320 is configured to expose the connecting via hole 510, and therefore the pixel electrode 400 can be electrically connected to the second electrode 220 of the thin film transistor 200. In FIG. 3A and FIG. 3B, in order to clearly illustrate, the parts of the structures such as the data line 100, the gate electrode 230, and the first electrode 210 located outside the opening portion 305 are shown by dotted lines, and the parts of the structures such as the first electrode 210, and the second electrode 220 located inside the opening portion 305 are shown by solid lines.

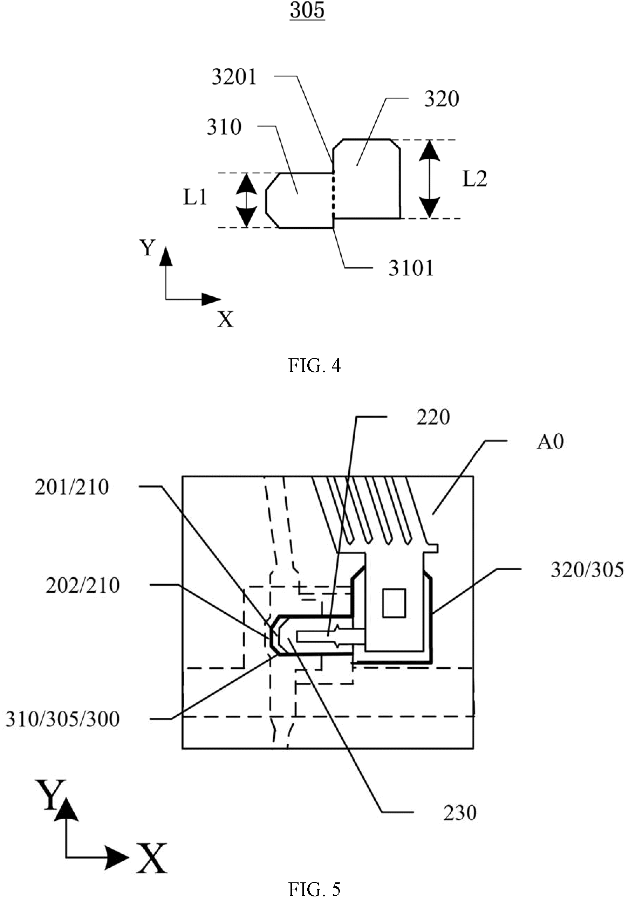

FIG. 4 is a schematic structural diagram of an opening portion in an array substrate provided by at least one embodiment of the present disclosure. FIG. 5 is a schematic diagram of a partial structure of an array substrate provided by at least one embodiment of the present disclosure.

As shown in FIG. 2 and FIG. 4, the orthographic projections of the first opening 310 and the second opening 320 on the straight line that extends along the second direction Y are overlapped with each other, and in the second direction Y, a size L1 of the first opening 310 is smaller than a size L2 of the second opening 320. By means of such arrangement, the position and size of the first opening 310 can be adapted to the position and structure of the thin film transistor 200, so as to ensure that the first opening 310 may only expose a part of the structure of the thin film transistor 200, thereby effectively reducing the parasitic capacitance between the thin film transistor 200 and the common electrode 300 as well as reducing the influence of the parasitic capacitance on the driving electric field. Meanwhile, the position and size of the second opening 320 can be adapted to the position and structure of the connecting via hole 510, so that the second opening 320 can expose the connecting via hole 510, thereby facilitating the stable connection of the pixel electrode 400 and the second electrode 220, and thus being conductive to enabling the display image to have good quality and stability. On the other hand, the common electrode 300 can effectively cover other structures (such as the data lines, and gate lines) in the array substrate, and can weaken the interference thereof on the pixel electrode, thereby being capable of reducing the light leakage phenomenon caused by the interference on the electric field generated by the data lines or the gate lines, and improving the quality of the display image.

As shown in FIG. 2, both the first direction X and the second direction Y are parallel to the base substrate 10, and the first direction X and the second direction Y are intersected; and in the embodiments of the present disclosure, it is described by taking the first direction X and the second direction Y to be perpendicular to each other as an example.

For example, as shown in FIG. 3A and FIG. 3B, an area of the orthographic projection of the first opening 310 on the base substrate 10 is larger than an area of the orthographic projection of the second opening 320 on the base substrate 10, so that part of the thin film transistor 200, part of the first electrode 210, at least part of the second electrode 220, and at least part of the gate electrode 230 can be exposed through the first opening 310, and the parasitic capacitance between the thin film transistor 200 and the common electrode 300 can be effectively reduced. For example, the area of the orthographic projection of the second opening 320 on the base substrate 10 is smaller, which can facilitate shielding a disordered electric field within the thin film transistor 200 through the common electrode 300, and reducing the influence thereof on the driving electric field.

For example, as shown in FIG. 3A and FIG. 4, the first opening 310 and the second opening 320 are in communication with each other and are arranged in the first direction X. By means of such arrangement, the manufacturing process of the common electrode 300 can be simplified. For example, in other embodiments of the present disclosure, the first opening 310 and the second opening 320 may also be arranged at intervals and are independent of each other so as to adapt to position change of the thin film transistor 200 and position change of the connecting through hole 510; and the positions and the shapes of the first opening 310 and the second opening 320 are not limited in the embodiments of the present disclosure.

For example, as shown in FIG. 3A and FIG. 3B, the first electrode 210 includes a first portion 201 and a second portion 202 which are connected to each other, the first portion 201 is exposed by the first opening 310, and the second portion 202 is covered by the common electrode 300. That is to say, a portion (i.e., the first portion 201) of the first electrode 210 is exposed by the first opening 310, and another portion (i.e., the second portion 202) of the first electrode 210 is not exposed by the first opening 310, but is covered by the common electrode 300, so that the parasitic capacitance between the first portion 201 of the first electrode 210 and the common electrode 300 can be reduced, and the influence of the second portion 202 of the first electrode 210 on the driving electric field is reduced, the light leakage phenomenon is reduced, as such, the relationship between the reduction of the parasitic capacitance and the reduction of the light leakage phenomenon can be balanced, so that the contrast ratio of the display image is higher, and the display effect is better and more stable.

For example, as shown in FIG. 3A and FIG. 3B, the first portion 201 of the first electrode 210 is located between the second portion 202 and the second electrode 220, and the second portion 202 of the first electrode 210 is connected to the first portion 201. The orthographic projection of the first portion 201 on the base substrate 10 is in a non-closed ring shape, and at least part of the orthographic projection of the second electrode 220 on the base substrate 10 is located in an area surrounded by the ring shape. For example, the orthographic projection of the first portion 201 exposed by the first opening 310 on the base substrate 10 is in a "U" shape, and the opening of the "U" shape faces the second electrode 220, so that the second electrode 220 can extend into the "U" shape, which can reduce the size of the thin film transistor 200 in the first direction X.

For example, as shown in FIG. 3A, the average width of the ring shape is D1, and D1=f²+h²+m²+n². In the calculation formula of D1, f represents a fluctuation value of the first opening 310, h represents the fluctuation value of the first electrode 210, m represents an alignment deviation of the first opening 310, n represents the alignment deviation of the first electrode 210, and the units of the f, h, m, and n are all micrometer (µm).

In some embodiments, as shown in FIG. 3A, the fluctuation value f of the first opening 310 and the fluctuation value h of the first electrode 210 are both 0.5 µm to 5 µm. For example, the fluctuation value f of the first opening 310 and the fluctuation value h of the first electrode 210 may be the same or different. For example, the fluctuation value f of the first opening 310 may be 0.5 µm to 2.5 µm, 1.5 µm to 3.0 µm, 2.0 µm to 3.5 µm, 4.0 µm to 4.5 µm or 4.5 µm to 5.0 µm. For example, the fluctuation value h of the first electrode 210 may be 0.5 µm to 2.5 µm, 1.5 µm to 3.0 µm, 2.0 µm to 3.5 µm, 4.0 µm to 4.5 µm or 4.5 µm to 5.0 µm. For example, the alignment deviation m of the first opening 310 and the alignment deviation n of the first electrode 210 are both 1.0 µm to 3.5 µm. For example, the alignment deviation m of the first opening 310 and the alignment deviation n of the first electrode 210 may be the same or different. For example, the alignment deviation m of the first opening 310 may be at least one selected from the group of 1.0 µm to 1.5 µm, 2.0 µm to 2.5 µm, 1.5 µm to 3.0 µm, 2.0 µm to 3.5 µm, and 3.0 µm to 3.5 µm. For example, the alignment deviation n of the first electrode 210 may be at least one selected from the group of 1.0 µm to 1.5 µm, 2.0 µm to 2.5 µm, 3.0 µm to 3.5 µm, 2.0 µm to 3.5 µm, and 1.5 µm to 3.0 µm. For example, the average width D1 of the orthographic projection (i.e., in the ring shape) of the first portion 201 on the base substrate 10 may be 1.7 µm to 4.2 µm, such as at least one selected from the group of 1.7 µm to 2.0 µm, 1.8 µm to 2.5 µm, 2.6 µm to 3.0 µm, 3.2 µm to 3.5 µm, and 3.8 µm to 4.0 µm.

The average width D1 of the ring shape is set to be 1.7 µm to 4.2 µm, so that the orthographic projection area of the second portion 202 of the first electrode 210 covered by the common electrode 300 on the base substrate 10 (with reference to FIG. 2) is relatively large, which facilitates reducing the risk of light leakage between structure of the thin film transistor 200 located on the side of the second portion 202 away from the first portion 201 and the second portion 202; and meanwhile, the first electrode 210 can have the first portion 201 exposed by the first opening 310, so that the parasitic capacitance between the first portion 201 and the common electrode 300 is reduced.

For example, as shown in FIG. 3A and FIG. 3B, the first portion 201 includes a first sub-portion 211, a second sub-portion 212, and a third sub-portion 213; the first sub-portion 211 and the second sub-portion 212 are oppositely arranged in the second direction Y, the third sub-portion 213 is located between the first sub-portion 211 and the second sub-portion 212, and the first sub-portion 211 and the second sub-portion 212 are connected through the third sub-portion 213. For example, the first sub-portion 211, the second sub-portion 212, and the third sub-portion 213 are of an integrated structure, both the first sub-portion 211 and the second sub-portion 212 extend along the first direction X, and the third sub-portion 213 extends along the second direction Y.

For example, as shown in FIG. 2 and FIG. 3B, the array substrate 01 includes a plurality of display areas A0; the display area A0 is located between two data lines 100 adjacent in the first direction X, and between two thin film transistors 200 adjacent in the second direction Y, and therefore the first sub-portion 211 is closer to the display area A0 than the third sub-portion 213 to the display area A0.

In some embodiments, as shown in FIG. 2, FIG. 3A, and FIG. 3B, the second portion 202 of the first electrode 210 includes a part thereof located on the first sub-portion 211 away from the second electrode 220, the part and the first sub-portion 211 are of an integrated structure, and therefore the size of the first sub-portion 211 in the second direction Y is smaller than the size of the third sub-portion 213 in the second direction Y, so that the size, in the second direction Y, of the part of the second portion 202 located on the side of the first sub-portion 211 away from the second electrode 220 can be relatively large; because the part is close to the display area A0 and covered with the common electrode 300, the risk of light leakage can be reduced.

In some embodiments, as shown in FIG. 2, FIG. 3A, and FIG. 3B, the second portion 202 of the first electrode 210 includes a part that is located on a side of the second sub-portion 212 away from the second electrode 220, the part and the second sub-portion 212 are of an integrated structure, and therefore the size of the second sub-portion 212 in the second direction Y is smaller than the size of the third sub-portion 213 in the second direction Y, so that the size, in the second direction Y, of the part of the second portion 202 located on the side of the second sub-portion 212 away from the second electrode 220 can be relatively large; because the part is close to the display area A0 and covered by the common electrode 300, the risk of light leakage can be reduced.

In some embodiments, as shown in FIG. 3A and FIG. 3B, an area of the orthographic projection of the first portion 201 of the first electrode 210 on the base substrate 10 is smaller than an area of the orthographic projection of the second portion 202 on the base substrate 10, so that most of the first electrode 210 can be covered by the common electrode 300, thereby reducing the risk of light leakage, and reducing the influence of the covered part on the driving electric field.

In some embodiments, as shown in FIG. 5, in the second direction Y, the parts of the first electrode 210 located on two sides of the second electrode 220 may both be covered by the common electrode 300, thereby reducing the risk of light leakage from the periphery of the display area A0; and facilitating shielding the signals of the data lines 100 through the common electrode 300, so as to reduce the influence on the driving electric field; meanwhile, the first portion 201 of the first electrode 210 is located on a side of the second electrode 220 close to the second portion 202 in the first direction X, and the first portion 201 extends in the second direction Y, because the first portion 201 is exposed through the first opening 310, the parasitic capacitance between the part and the common electrode 300 can be reduced, and normal image display is facilitated.

In some embodiments, as shown in FIG. 3A and FIG. 3B, the area of the orthographic projection of the first portion 201 on the base substrate 10 is 20%-50% (e.g., 20%-30%, 25%-35%, 40%-45% or 30%-45%) of the area of the orthographic projection of the second portion 202 on the base substrate 10. By means of such configuration, the first portion 201 of the first electrode 210 exposed by the common electrode 300 and the second portion 202 of the first electrode 210 covered by the common electrode 300 may be in a proper proportion, thus a reasonable balance degree between reduction of the parasitic capacitance between the first electrode 210 and the common electrode 300 and reduction of the light leakage phenomenon is achieved, so that the display screen has good contrast ratio and display quality.

For example, as shown in FIG. 3A and FIG. 3B, the thin film transistor 200 further includes an active pattern 600; and the active pattern 600 is connected to the first electrode 210 and the second electrode 220 respectively and at least partially overlap the gate electrode 230. For example, in the direction perpendicular to the base substrate 10, the first electrode 210 and the second electrode 220 overlap the active pattern 600 respectively. For example, the first electrode 210 and the second electrode 220 may be located at the same layer, and an insulating structure may be arranged between this layer and the active pattern 600, and the first electrode 210 and the second electrode 220 may be respectively connected to the active pattern 600 through via holes that penetrate through the insulating structure, but the disclosure is not limited thereto. For example, the active pattern 600 is made of a semiconductor material. For example, the material of the active pattern 600 includes amorphous silicon, low-temperature polycrystalline silicon or oxide semiconductor material, but the disclosure is not limited thereto.

For example, as shown in FIG. 3A and FIG. 3B, the active pattern 600 includes a third portion 630 and a fourth portion 640 which are connected to each other; the third portion 630 is exposed by the first opening 310, and the fourth portion 640 is covered by the common electrode 300. The fourth portion 640 is closer to the display area A0 of the array substrate 01 than the third portion 630 to the display area A0; through covering the fourth portion 640 with the common electrode 300, the risk that light leakage occurs from the edge of the active pattern 600 is reduced , and meanwhile, after the third portion 630 is exposed by the first opening 310, the parasitic capacitance between the third portion 630 serving as a conductor and the common electrode 300 can be reduced to facilitate display.

For example, as shown in FIG. 3A and FIG. 3B, the fourth portion 640 of the active pattern 600 includes a first edge portion 641 and a second edge portion 642; the first edge portion 641 and the second edge portion 642 are opposite to each other in the second direction Y and are arranged at intervals; and the third portion 630 is located between the first edge portion 641 and the second edge portion 642. For example, the first edge portion 641 is closer to the display area A0 than the third portion 630 to the display area A0, the second edge portion 642 is closer to the display area A0 than the third portion 630 to the display area A0, and by means of such arrangement, the risk that light emitted from the display area A0 leaking out from the edge portion of the fourth portion 640 can be reduced.

For example, as shown in FIG. 3A and FIG. 3B, in the second direction Y, the size of the first edge portion 641 and the size of the second edge portion 642 are both smaller than the size of the third portion 630. The middle portion (for example, the gravity center) of the active pattern 600 is located on the third portion 630, at least part of the second electrode 220 is located on the side of the third portion 630 away from the base substrate 10 and is in contact with the third portion 630, by means of such arrangement, the third portion 630 and at least part of the second electrode 220 can both be exposed by the first opening 310, so that the parasitic capacitance between the third portion 630 and the common electrode 300 can be reduced, and the parasitic capacitance between the second electrode 220 and the common electrode 300 can be reduced.

For example, as shown in FIG. 3A and FIG. 3B, in the first direction X, the active pattern 600 include a first edge 611 away from the second electrode 220; the first electrode 210 includes a second edge 221 away from the second electrode 220; the gate electrode 230 includes a third edge 231 away from the second electrode 220; the third edge 231 extends beyond the second edge 221 of the first electrode 210; and the second edge 221 extends beyond the first edge 611 of the active pattern 600. The first edge 611 of the active pattern 600 is covered by the second electrode 220, the first edge 611 is closer to the second electrode 220 than the second edge 221 to the second electrode 220, and the second edge 221 of the first electrode 210 is closer to the second electrode 220 than the third edge 231 of the gate electrode 230 to the second electrode 220.

By means of such arrangement, on one hand, the risk of light leakage occurred near the first edge of the active pattern can be reduced; on the other hand, the size of the active pattern in the first direction can be reduced, so that in the direction perpendicular to the base substrate, the overlapping area between the active pattern and the gate electrode is reduced, the parasitic capacitance between the active pattern and the gate electrode is reduced to facilitate display.

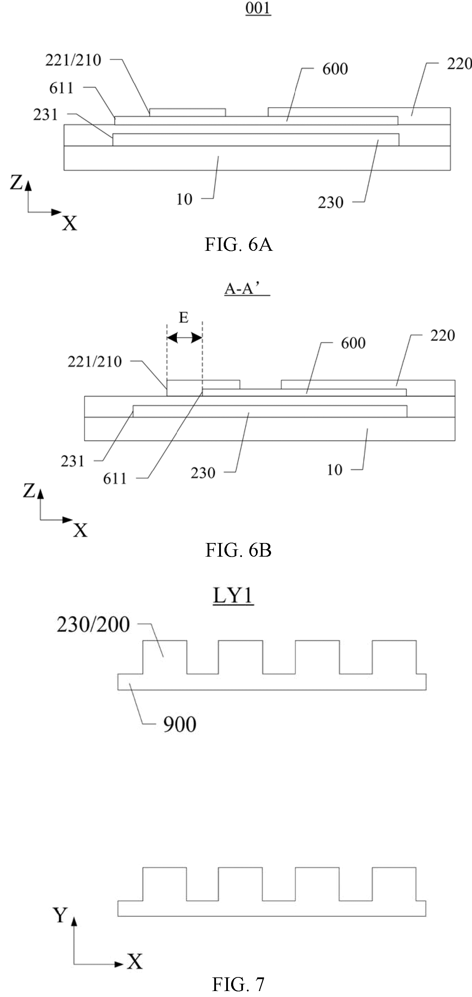

FIG. 6A is a schematic cross-sectional diagram of some array substrates. FIG. 6B is a schematic cross-sectional diagram of an array substrate provided by at least one embodiment of the present disclosure.

For example, as shown in FIG. 6A, in some array substrates 001, the second edge 221 of the first electrode 210 is usually closer to the second electrode 220 than the first edge 611 of the active pattern 600 to the second electrode 220, and the first edge 611 of the active pattern 600 is substantially flush with the third edge 231 of the gate electrode 230, as such, the parasitic capacitance between the active pattern 600 and the gate electrode 230 is relatively large, and display is not facilitated.

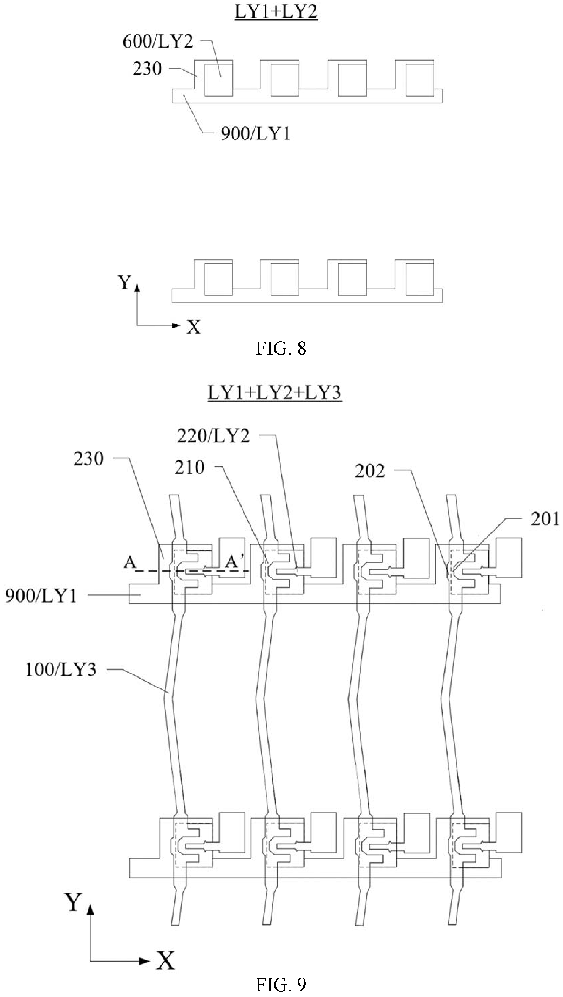

For example, in some embodiments of the present disclosure, FIG. 6B may be a schematic cross-sectional diagram of the array substrate taken along line A-A' in FIG. 9 (with reference to description below). As shown in FIG. 6B, the size of the second edge 221 of the first electrode 210 extending beyond the first edge 611 of the active pattern 600 is E, and E=r²+h²+t²+n², in which, r represents the fluctuation value of the active pattern 600, h represents the fluctuation value of the first electrode 210, t represents the alignment deviation of the active pattern 600, and n represents the alignment deviation of the first electrode 210. For example, E may be 1.7 µm to 4.2 µm, such as at least one selected from the group consisting of 1.7 µm to 2.0 µm, 1.8 µm to 2.5 µm, 2.6 µm to 3.0 µm, 3.2 µm to 3.5 µm, and 3.8 µm to 4.0 µm. Therefore, the size of the second edge 221 of the first electrode 210 extending beyond the first edge 611 of the active pattern 600 is small, which facilitates reducing the size of the first electrode 210 in the first direction X, thereby reducing the parasitic capacitance between the first electrode 210 and the gate electrode 230.

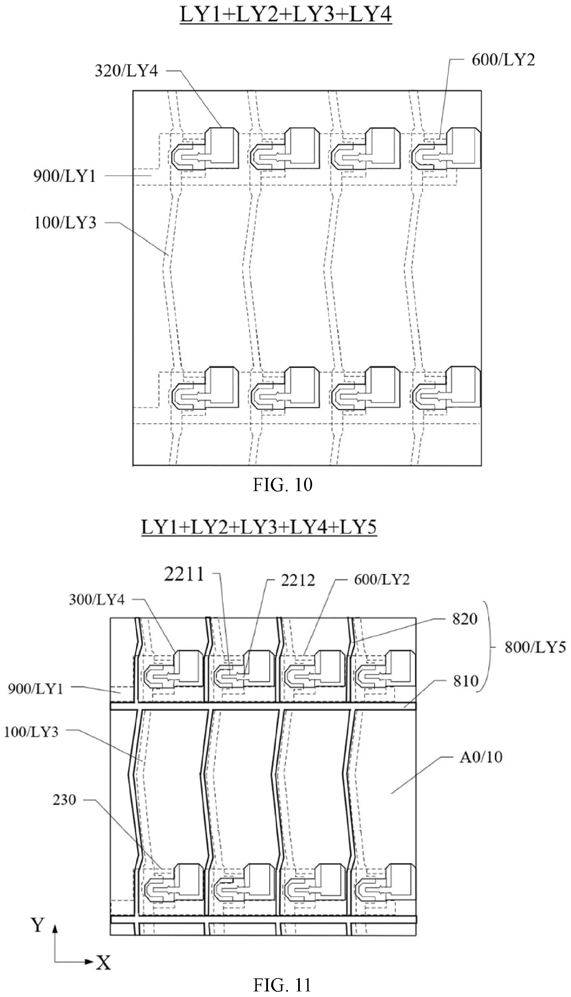

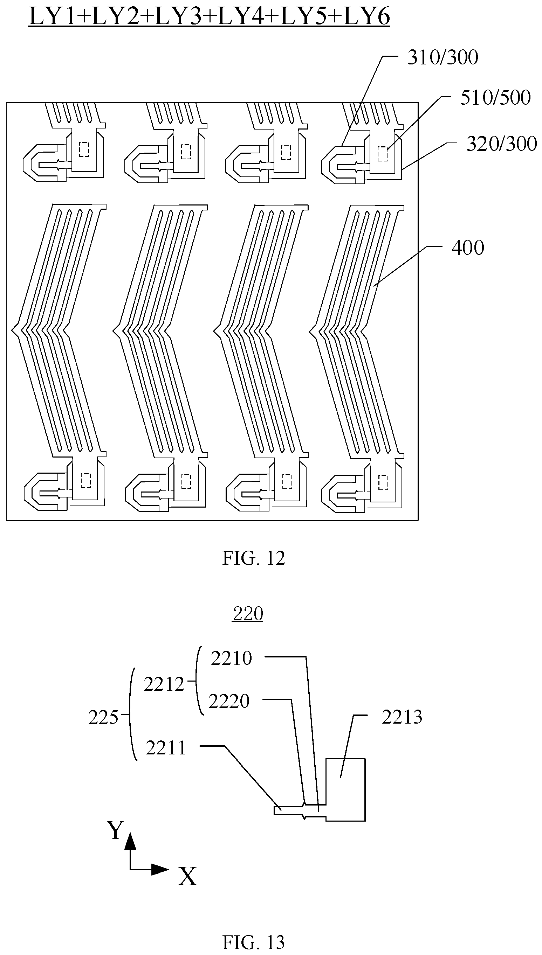

FIG. 7 is a schematic structural diagram of a first conductive pattern in an array substrate provided by at least one embodiment of the present disclosure; FIG. 8 is a schematic diagram of a stacked layer of a first conductive pattern and a semiconductor pattern in an array substrate provided by at least one embodiment of the present disclosure; FIG. 9 is a schematic diagram of a stacked layer of a first conductive pattern, a semiconductor pattern, and a third conductive pattern in an array substrate provided by at least one embodiment of the present disclosure; FIG. 10 is a schematic diagram of a stacked layer of a first conductive pattern, a semiconductor pattern, a third conductive pattern, and a fourth conductive pattern in an array substrate provided by at least one embodiment of the present disclosure; and FIG. 11 is a schematic diagram of a stacked layer of a first conductive pattern, a semiconductor pattern, a third conductive pattern, a fourth conductive pattern, and a fifth conductive pattern in an array substrate provided by at least one embodiment of the present disclosure. FIG. 12 is a schematic diagram of a stacked layer of a first conductive pattern, a semiconductor pattern, a third conductive pattern, a fourth conductive pattern, a fifth conductive pattern, and a sixth conductive pattern in any array substrate provided by at least one embodiment of the present disclosure.

For example, as shown in FIG. 7 to FIG. 12, the array substrate includes a first conductive pattern LY1, a semiconductor pattern LY2, a third conductive pattern LY3, a fourth conductive pattern LY4, a fifth conductive pattern LY5, and a sixth conductive pattern LY6 which are sequentially stacked in the direction perpendicular to the base substrate.

For example, as shown in FIG. 7, the first conductive pattern LY1 includes a plurality of gate lines 900 which are arranged at intervals in the second direction Y, the gate line 900 extends in the first direction X and is electrically connected to the gate electrodes 230 of the thin film transistors 200, as an integrated structure. As shown in FIG. 8, the semiconductor pattern LY2 is located on the first conductive pattern LY1, for example, an insulating structure (not shown in the figure) may be arranged between the first conductive pattern LY1 and the semiconductor pattern LY2. For example, the semiconductor pattern LY2 includes the abovementioned active patterns 600, and the active patterns 600 are overlapped with the gate electrodes 230. As shown in FIG. 9, the third conductive pattern LY3 is located on the side of the semiconductor pattern LY2 away from the base substrate, and the third conductive pattern LY3 includes a plurality of data lines 100. The data lines 100 extend in the second direction Y and are electrically connected to the second portions 202 of the first electrodes 210; the data lines 100, the first electrodes 210, and the second electrodes 220 are arranged at the same layer; and the data lines 100 and the first electrodes 210 are of an integrated structure. By means of such arrangement, the manufacturing process of the data lines 100, the first electrodes 210, and the second electrodes 220 can be simplified, which facilitate controlling the matching precision between the first electrodes 210 and the second electrodes 220, and the arrangement is facilitated. For example, in some embodiments of the present disclosure, the semiconductor pattern LY2 and the third conductive pattern LY3 may be sequentially formed by two masks respectively. In some embodiments, the semiconductor pattern LY2 and the third conductive pattern LY3 may be formed by one mask simultaneously; and the manufacturing process of the semiconductor pattern LY2 and the third conductive pattern LY3 is not limited in the embodiments of the present disclosure.

For example, as shown in FIG. 10, the fourth conductive pattern LY4 is arranged on the side of the third conductive pattern LY3 away from the base substrate in a whole surface manner, for example, an insulating structure (not shown in the figure) is further arranged between the third conductive pattern LY3 and the fourth conductive pattern LY4, for example, the material of the insulating structure may be resin, but the disclosure is not limited thereto. For example, the fourth conductive pattern includes the common electrode. For example, the insulating structure between the first conductive pattern LY1 and the semiconductor pattern LY2 may be called as a gate insulating layer; and the insulating structure between the third conductive pattern LY3 and the fourth conductive pattern LY4 may be made of the same material as the gate insulating layer.

For example, as shown in FIG. 11, the fifth conductive pattern LY5 may include an electrode pattern 800; and the electrode pattern 800 is located on the side of the common electrode 300 away from the thin film transistors 200 (with reference to FIG. 2) and is electrically connected to the common electrode 300. For example, the electrode pattern 800 may be in contact with the common electrode 300 so as to be electrically connected to the common electrode 300. For example, the electrode pattern is made of a metal material, the common electrode is made of ITO, and the sheet resistance of the common electrode 300 can be reduced by making the electrode pattern 800 be electrically connected to the common electrode 300, so that signals transmitted by the common electrode 300 have uniformity. Definitely, in some embodiments, an insulating structure may also be arranged between the fourth conductive pattern LY4 and the fifth conductive pattern LY5, and the insulating structure may include a plurality of via holes; the fifth conductive pattern LY5 may be electrically connected to the fourth conductive pattern LY4 through the via holes; and the connecting mode between the fourth conductive pattern LY4 and the fifth conductive pattern LY5 is not limited in the embodiments of the present disclosure. For example, in some embodiments of the present disclosure, the fourth conductive pattern LY4 and the fifth conductive pattern LY5 may be sequentially formed by two masks respectively. In some embodiments, the fourth conductive pattern LY4 and the fifth conductive pattern LY5 may be formed by one mask simultaneously; and the manufacturing process of the fourth conductive pattern LY4 and the fifth conductive pattern LY5 is not limited in the embodiments of the present disclosure.

In some embodiments, as shown in FIG. 11, the electrode pattern 800 includes a plurality of first pattern portions 810 and a plurality of second pattern portions 820; the first pattern portions 810 extend in the first direction X, the second pattern portions 820 extend in the second direction Y, the plurality of first pattern portions 810 are arranged at intervals in the second direction Y, and the adjacent first pattern portions 810 are electrically connected through the second pattern portion 820. For example, the plurality of first pattern portions 810 and the plurality of second pattern portions 820 are connected to form a "net-shaped" structure, so that the overall sheet resistance of the electrode pattern 800 can be reduced.

For example, as shown in FIG. 11, at least part of the orthographic projections of the second pattern portions 820 on the base substrate 10 are located outside the orthographic projections of the data lines 100 on the base substrate 10. For example, the second pattern portion 820 and the data line 100 are closely adjacent in the first direction X and are arranged at intervals, so that the parasitic capacitance between the second pattern portion 820 and the data line 100 can be reduced. For example, the second pattern portion 820 and the data line 100 being closely adjacent in the first direction X refers to that no other component is arranged between the second pattern portion 820 and the data line 100, so that the area of a light-emitting area A0 is increased, and the pixel aperture ratio is increased.

In some embodiments, with reference to FIG. 11, the orthographic projections of the second pattern portion 820 on the base substrate 10 may be partially overlapped with the orthographic projection of the data line 100 on the base substrate 10, so that when the parasitic capacitance between the second pattern portion 820 and the data line 100 is within a reasonable range (for example, a range in which the parasitic capacitance between the second pattern portion 820 and the data line 100 does not affect the display), the pixel aperture ratio is increased as much as possible to facilitate display; and the overlapping area of the orthographic projection of the second pattern portion 820 on the base substrate 10 and the orthographic projection of the data line 100 on the base substrate 10 is not limited in the embodiments of the present disclosure.

For example, as shown in FIG. 11, at least part of the orthographic projection of the first pattern portion 810 on the base substrate 10 is located outside the orthographic projection of the gate line 900 on the base substrate 10. For example, the first pattern portion 810 and the gate line 900 are closely adjacent in the second direction Y and are arranged at intervals, so that the parasitic capacitance between the first pattern portion 810 and the gate line 900 can be reduced. The first pattern portion 810 and the gate line 900 being closely adjacent in the second direction Y refers to that no other component is arranged between the first pattern portion 810 and the gate line 900, so that the area of the light-emitting area A0 is increased, and the pixel aperture ratio is increased.

In some embodiments, with reference to FIG. 11, the orthographic projection of the first pattern portion 810 on the base substrate 10 may also be at least partially overlapped with the orthographic projection of the gate line 900 on the base substrate 10, so that when the parasitic capacitance between the first pattern portion 810 and the gate line 900 is within a reasonable range (for example, a range in which the parasitic capacitance between the first pattern portion 810 and the gate line 900 does not affect display), the pixel aperture ratio is increased as much as possible to facilitate display; and the overlapping area of the orthographic projection of the first pattern portion 810 on the base substrate 10 and the orthographic projection of the gate line 900 on the base substrate 10 is not limited in the embodiments of the present disclosure.

For example, as shown in FIG. 4 and FIG. 11, in the second direction Y, the second opening 320 is farther away from the gate line 900 than the first opening 310, the second opening 320 is spaced apart from the gate line 900, and the gate line 900 is the gate line 900 to which the thin film transistor exposed by the first opening 310 is connected. For example, the first opening 310 includes a protruding portion 3101 protruded relative to an edge of the second opening 320 extending along the X direction, and the protruding portion 3101 and the second opening 320 are not overlapped on a plane perpendicular to the first direction X. As shown in FIG. 11, the second opening 320 does not expose the gate line 900, that is, the gate line 900 is completely covered by the common electrode 300, so that the influence of the gate line 900 on the driving electric field can be reduced to facilitate display.

For example, as shown in FIG. 4 and FIG. 11, the edge 3201 of the second opening 320 close to the first opening 310 is adjacent to the gate electrode 230, and the second opening 320 does not expose the gate electrode 230, so that the influence of the gate electrode 230 on the driving electric field can be reduced to facilitate display.

FIG. 13 is a schematic structural diagram of a second electrode provided by at least one embodiment of the present disclosure.

For example, as shown in FIG. 3A and FIG. 13, the second electrode 220 includes an extending portion 225 which extends along the first direction X; the orthographic projection of the first portion 201 on the base substrate 10 is in a ring shape, and the extending portion 225 extends into an area surrounded by the ring shape. The extending portion 225 includes a first extending sub-portion 2211 and a second extending sub-portion 2212; the first extending sub-portion 2211 is exposed by the first opening 310, the first extending sub-portion 2211 is closer to the first electrode 210 than the second extending sub-portion 2212, and the orthographic projection of the first extending sub-portion 2211 on the base substrate 10 is within the orthographic projection of the active pattern 600 on the base substrate 10. For example, the extending portion 225 is a part of the second electrode 220, for example, the second electrode 220 further includes a contact portion 2213 located on a side of the extending portion 225 away from the first electrode 210, and the contact portion 2213 is configured to be electrically connected to the pixel electrode 400.

For example, as shown in FIG. 3 and FIG. 13, in the second direction Y, the size of the first extending sub-portion 2211 is smaller than the size of the second extending sub-portion 2212. Because the orthographic projection of the first extending sub-portion 2211 on the base substrate is within the orthographic projection of the gate electrode 230 on the base substrate, through making the size of the first extending sub-portion 2211 in the second direction Y be small, the overlapping area between the first extending sub-portion 2211 and the gate electrode 230 can be reduced, and the parasitic capacitance between the first extending sub-portion 2211 and the gate electrode 230 is small.

For example, as shown in FIG. 3 and FIG. 13, in the first direction X, the size of the first extending sub-portion 2211 is larger than the size of the second extending sub-portion 2212, for example, the size of the second extending sub-portion 2212 may be 1/5-1/2, such as 1/5, 1/4, 1/3 or 1/2, of the size of the first extending sub-portion 2211, so that the parasitic capacitance between the first extending sub-portion 2211 and the gate electrode 230 can be reduced.

For example, as shown in FIG. 13, the second extending sub-portion 2212 of the second electrode 220 includes a body portion 2210 and at least one protruding portion 2220; the protruding portion 2220 is connected to the body portion 2210; and the protruding portion 2220 protrudes relative to the body portion 2210 in the first direction X. For example, the orthographic projection of the protruding portion 2220 on the base substrate 10 is polygonal, such as triangular or quadrilateral, for example, the orthographic projection of the protruding portion 2220 on the base substrate 10 may also be semicircular; and the shape of the protruding portion 2220 is not limited in the embodiments of the present disclosure.

For example, as shown in FIG. 13, the protruding portion 2220 is located on a side of the body portion 2210 in the second direction Y; the protruding portion 2220 and the body portion 2210 may be of an integrated structure and made of the same material, but the disclosure is not limited thereto. For example, the second extending sub-portion 2212 includes the protruding portion 2220, so that the current conduction area of the second extending sub-portion 2212 can be increased to facilitate current transmission and improve the ion transmission efficiency of the thin film transistor 200 (with reference to FIG. 3).

For example, as shown in FIG. 13, the second extending sub-portion 2212 includes two protruding portions 2220 which are respectively located on two sides of the body portion 2210. For example, the two protruding portions 2220 of the second extending sub-portion 2212 are respectively disposed on two sides of the body portion 2210, and are symmetrically disposed, but the disclosure is not limited thereto. In some embodiments, the two protruding portions 2220 of the second extending sub-portion 2212 may also be arranged at an interval in the first direction X; and the positions of the plurality of protruding portions 2220 are not limited in the embodiments of the present disclosure.

For example, as shown in FIG. 3A and FIG. 13, there has an interval between the orthographic projection of the protruding portion 2220 on a plane perpendicular to the second direction Y and the orthographic projection of the first electrode 210 on the plane, so that the distance between the first extending sub-portion 2211 and the first portion 211 of the first electrode 210 in the second direction Y is reduced, thereby facilitating miniaturization design of the thin film transistor 200 and increasing the pixel aperture ratio.

For example, as shown in FIG. 12, the sixth conductive pattern LY6 is located on a side of the fifth conductive pattern LY5 away from the base substrate 10 and includes the pixel electrodes 400. For example, as shown in FIG. 3 and FIG. 12, the array substrate 01 further includes an insulating layer 500 located between the common electrode 300 and the pixel electrodes 400; the insulating layer 500 includes connecting via holes 510, and the pixel electrodes 400 are connected to the common electrode 300 through the connecting via holes 510. For example, the insulating structure between the third conductive pattern LY3 and the fourth conductive pattern LY4 may be made of the same material as the insulating layer 500.

For example, as shown in FIG. 12, the orthographic projection area of the connecting via hole 510 on the base substrate 10 is smaller than the orthographic projection area of the second opening 320 on the base substrate 10. For example, the minimum distance between the connecting via hole 510 and the second opening 320 is D2, and D2=y²+e²+s²+g², in which, y represents the fluctuation value of the second opening 320, h represents the fluctuation value of the connecting via hole 510, s represents the alignment deviation of the second opening 320, and g represents the alignment deviation of the connecting via hole 510.

For example, as shown in FIG. 3A, the fluctuation value y of the second opening 320 and the fluctuation value h of the connecting via hole 510 are both 0.5 µm to 5 µm. For example, the fluctuation value y of the second opening 320 and the fluctuation value h of the connecting via hole 510 may be the same or different. For example, the fluctuation value y of the second opening 320 may be 0.5 µm to 2.5 µm, 1.5 µm to 3.0 µm, 2.0 µm to 3.5 µm, 4.0 µm to 4.5 µm or 4.5 µm to 5.0 µm. For example, the fluctuation value h of the connecting via hole 510 may be 0.5 µm to 2.5 µm, 1.5 µm to 3.0 µm, 2.0 µm to 3.5 µm, 4.0 µm to 4.5 µm, or 4.5 µm to 5.0 µm. For example, the alignment deviation s of the second opening 320 and the alignment deviation g of the connecting via hole 510 may be the same or different. For example, the alignment deviation s of the second opening 320 may be 1.0 µm to 1.5 µm, 2.0 µm to 2.5 µm, 3.0 µm to 3.5 µm, 2.0 µm to 3.5 µm, or 1.5 µm to 3.0 µm. For example, the alignment deviation g of the connecting via hole 510 may be 1.0 µm to 1.5 µm, 2.0 µm to 2.5 µm, 3.0 µm to 3.5 µm, 2.0 µm to 3.5 µm, or 1.5 µm to 3.0 µm. For example, the minimum distance D2 between the connecting via hole 510 and the second opening 320 is 1.7 µm to 2.5 µm, for example, 1.7 µm to 2.0 µm, 1.8 µm to 2.1 µm, 1.9 µm to 2.2 µm, or 2.0-2.4 µm.

By making the minimum distance D2 between the connecting via hole 510 and the second opening 320 satisfy the above-mentioned range, on one hand, at least part of the insulating layer 500 can be located in the area between the connecting via hole 510 and the second opening 320, so that the risk of short circuit between the common electrode 300 and the pixel electrodes 400 is reduced; and on the other hand, the coverage degree of the common electrode 300 on the thin film transistors 200 can be increased, and therefore the influence of the electric field in the thin film transistors 200 on the driving electric field is reduced.

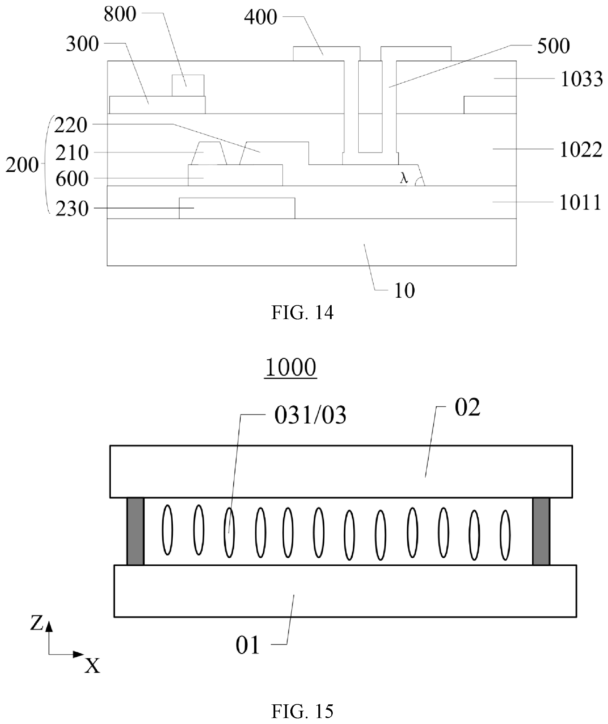

FIG. 14 is a schematic cross-sectional diagram of an array substrate provided by at least one embodiment of the present disclosure.

For example, as shown in FIG. 14, the thin film transistor 200 includes a gate electrode 230, a first electrode 210, and a second electrode 220; the gate insulating layer 1011 is disposed on the gate electrode 230; the active pattern 600 is disposed on the gate insulating layer 1011; an organic insulating layer 1022 is disposed on the first electrode 210 and the second electrode 220; the common electrode 300 is disposed on the insulating structure 1022; the electrode pattern 800 is located on a side of the common electrode 300 away from the base substrate 10 and in contact with the common electrode 300; the common electrode 300 and the electrode pattern 800 are both covered by the insulating structure 1033; and the pixel electrode 400 is located on the insulating structure 1033 and electrically connected to the second electrode 220 through the connecting via hole 500 penetrating through the insulating structure 1033. For example, the insulating structure 1022 may be made of an organic material, and the insulating structure 1033 may be represented as a passivation layer PVX, but the disclosure is not limited thereto.

FIG. 15 is a schematic structural diagram of a display panel provided by at least one embodiment of the present disclosure.

As shown in FIG. 15, at least one embodiment of the present disclosure further provides a display panel 1000. The display panel 1000 includes the array substrate 01 described in any of the above embodiments and an opposite substrate 02, and the opposite substrate 02 and the array substrate 01 are oppositely disposed to form a cell.

For example, as shown in FIG. 15, a liquid crystal layer 03 is disposed in the cell, and includes a plurality of liquid crystal molecules 031. In some embodiments, a filter layer may be arranged on a side of the opposite substrate 02 facing the array substrate 01 to achieve color display. For example, the filter layer includes a plurality of filter units, and each filter unit may correspond to one display electrode. For example, the plurality of filter units may include a plurality of red filter units, a plurality of green filter units, and a plurality of blue filter units, but the disclosure is not limited thereto. As such, the display panel 1000 includes the above-mentioned array substrate, and therefore the technical effects of the array substrate can be embodied in the display panel 1000, which will not be repeated here.

For example, with reference to FIG. 14 and FIG. 15, in some embodiments, the elastic coefficient K22 of the liquid crystal molecules 031 is larger than 20; the thickness of the liquid crystal layer 03 is 2.8 µm; the insulating structure 1022 is made of resin; the insulating structure 1033 is a passivation layer PVX and has a thickness of 0.25 µm; the first electrode 210 and the second electrode 220 are located at the same layer, and the slope angle λ formed after the layer is patterned is 40° to 50°, such as 45°. For example, the array substrate further includes a light shielding layer BM (not shown in the figure), and the light shielding layer BM is located on a side of the first electrode 210 away from the base substrate 10, and has a thickness of 1.15 µm. For example, the filter layer in the opposite substrate 02 may include a color film CF and may have a thickness of 1.55 µm. By means of such arrangement, the contrast ratio of the display panel can reach 2000.

For example, with reference to FIG. 14 and FIG. 15, in some embodiments, the elastic coefficient K22 of the liquid crystal molecules 031 is larger than 20; the thickness of the liquid crystal layer 03 is 2.8 µm; the insulating structure 1022 is made of resin; the insulating structure 1033 is a passivation layer PVX and has a thickness of 0.25 µm; the first electrode 210 and the second electrode 220 are located at the same layer, and the slope angle λ formed after the layer is patterned is 20° to 30°, such as 25°. For example, the array substrate further includes a light shielding layer BM (not shown in the figure), and the light shielding layer BM is located on a side of the first electrode 210 away from the base substrate 10, and has a thickness of 1.5 µm. For example, the filter layer in the opposite substrate 02 may include the color film CF and may have a thickness of 2 µm. By means of such arrangement, the contrast ratio of the display panel can reach 2450.

For example, with reference to FIG. 14 and FIG. 15, in some embodiments, the elastic coefficient K22 of the liquid crystal molecules 031 is larger than 20; the thickness of the liquid crystal layer 03 is 2.8 µm; the insulating structure 1022 is made of resin; the insulating structure 1033 is the passivation layer PVX and has a thickness of 0.25 µm; the first electrode 210 and the second electrode 220 are located at the same layer, and the slope angle λ formed after the layer is patterned is 20° to 30°, such as 25°. For example, the array substrate further includes a light shielding layer BM (not shown in the figure), and the light shielding layer BM is located on a side of the first electrode 210 away from the base substrate 10 and has a thickness of 2.0 µm. For example, the filter layer in the opposite substrate 02 may include the color film CF and have a thickness of 2.2 µm. By means of such arrangement, the contrast ratio of the display panel can reach 2500.

In the embodiments of the present disclosure, elements located at the same layer may be formed from a same film layer through a same patterning process. For example, the elements located at the same layer may be located on a surface of a same element away from the base substrate.

It is to be noted that, for clarity, the thickness of layers or areas is exaggerated in the drawings used for describing the embodiments of the present disclosure. It is to be understood that when elements such as layers, films, areas, or substrates are referred to as being "on" or "under" another element, the element may be "directly" on or under the other element, or intermediate elements may exist.

In the embodiments of the present disclosure, the patterns or patterning process may include only a photolithography process, or may include a photolithography process and an etching step, or may include other processes such as printing or inkjet for forming a predetermined pattern. The photolithography process refers to processes including film formation, exposure, and development, using photoresist, masks, exposure machines, and other tools to form the pattern. The corresponding patterning process can be selected according to the structures formed in the embodiments of the present disclosure.

In the embodiments of the present disclosure, components located on different layers are formed by different films through different patterning processes.

At least one embodiment of the present disclosure further provides a display device, and the display device includes the display panel described in any of the above embodiments. As such, the display device includes the above display panel, and therefore, the technical effects of the above display panel can also be realized in the display device, which will not be repeated here.

The following statements should be noted:
(1) The drawings of the present disclosure involve only the structure(s) in connection with the embodiment(s) of the present disclosure, and other structure(s) can be referred to common design(s).
(2) In case of no conflict, features in one embodiment or in different embodiments can be combined to obtain new embodiments.

What have been described above are only specific implementations of the present disclosure, the protection scope of the present disclosure is not limited thereto. The protection scope of the present disclosure should be based on the protection scope of the claims.

## Claims

1. An array substrate, comprising:
a base substrate;
a plurality of data lines, located on the base substrate and arranged along a first direction;
a plurality of thin film transistors, located on the base substrate and arranged in an array along the first direction and a second direction, wherein each of the plurality of thin film transistors comprises a first electrode, a second electrode, and a gate electrode, the first electrode is electrically connected to a data line of the plurality of data lines, both the first direction and the second direction are parallel to the base substrate, and the first direction intersects the second direction;
a common electrode, located on a side of the plurality of data lines and the plurality of thin film transistors away from the base substrate;
a plurality of pixel electrodes, located on a side of the common electrode away from the base substrate and each configured to form an electric field with the common electrode; and
an insulating layer, located between the common electrode and the plurality of thin film transistors, the plurality of pixel electrodes are each electrically connected to the second electrode through a connecting via hole in the insulating layer;
wherein orthographic projections of the plurality of data lines on the base substrate are completely within an orthographic projection of the common electrode on the base substrate;
the common electrode comprises a plurality of opening portions; the plurality of opening portions are disposed in one-to-one correspondence with the plurality of thin film transistors; each of the plurality of opening portions comprise a first opening and a second opening; the first opening is configured to expose a part of a thin film transistor; the second opening is configured to expose the connecting via hole; orthographic projections of the first opening and the second opening on a straight line that extends along the second direction are overlapped with each other; and in the second direction, a size of the first opening is smaller than a size of the second opening.

2. The array substrate according to claim 1, wherein the first electrode comprises a first portion and a second portion connected to each other; the first portion is exposed by the first opening; and the second portion is covered by the common electrode.

3. The array substrate according to claim 2, wherein the first portion is located between the second portion and the second electrode; an orthographic projection of the first portion on the base substrate is in a ring shape that is non-closed; and at least a part of an orthographic projection of the second electrode on the base substrate is located in an area surrounded by the ring shape;
an average width of the ring shape is D1, and D1=f²+h²+m²+n²; wherein f represents a fluctuation value of the first opening, h represents a fluctuation value of the first electrode, m represents an alignment deviation of the first opening, and n represents an alignment deviation of the first electrode.

4. The array substrate according to claim 3, wherein the fluctuation value f of the first opening and the fluctuation value h of the first electrode are both 0.5 µm to 5 µm; the alignment deviation m of the first opening and the alignment deviation n of the first electrode are both 1.0 µm to 3.5 µm; and the average width D1 of the ring shape is 1.7 µm to 4.2 µm.

5. The array substrate according to any one of claims 2 to 3, wherein an area of an orthographic projection of the first portion on the base substrate is smaller than an area of an orthographic projection of the second portion on the base substrate.

6. The array substrate according to claim 5, wherein the area of the orthographic projection of the first portion on the base substrate is 20% to 50% of the area of the orthographic projection of the second portion on the base substrate.

7. The array substrate according to any one of claims 2 to 6, wherein the first portion comprises a first sub-portion, a second sub-portion, and a third sub-portion; the first sub-portion and the second sub-portion are oppositely arranged in the second direction, the third sub-portion is located between the first sub-portion and the second sub-portion, and the first sub-portion and the second sub-portion are connected through the third sub-portion; and
a size of the first sub-portion in the second direction, and/or a size of the second sub-portion in the second direction is smaller than a size of the third sub-portion in the first direction.

8. The array substrate according to claim 2, wherein the first portion of the first electrode extends along the second direction; and portions of the first electrode on two sides of the second electrode in the second direction are covered by the common electrode.

9. The array substrate according to claim 3, wherein each of the plurality of thin film transistors further comprises an active pattern; the active pattern is connected to the first electrode and the second electrode respectively, and is at least partially overlapped with the gate electrode;
wherein the active pattern comprises a third portion and a fourth portion connected to each other, the third portion is exposed by the first opening; and the fourth portion is covered by the common electrode.

10. The array substrate according to claim 9, wherein the fourth portion comprises a first edge portion and a second edge portion; the first edge portion and the second edge portion are opposite to each other in the second direction and are arranged at intervals; and the third portion is located between the first edge portion and the second edge portion; and
a size of the first edge portion in the second direction and a size of the second edge portion in the second direction are both smaller than a size of the third portion in the second direction.

11. The array substrate according to claim 9, wherein in the first direction, the active pattern comprises a first edge away from the second electrode; the first electrode comprises a second edge away from the second electrode; the gate electrode comprises a third edge away from the second electrode;
the third edge extends beyond the second edge of the first electrode; and the second edge extends beyond the first edge of the active pattern.

12. The array substrate according to claim 11, wherein a size of the second edge extending beyond the first edge is E, and E=r²+h²+t²+n²; and
r represents a fluctuation value of the active pattern, h represents a fluctuation value of the first electrode, t represents an alignment deviation of the active pattern, and n represents an alignment deviation of the first electrode.

13. The array substrate according to claim 2, wherein the data line extends in the second direction and is electrically connected to the second portion of the first electrode; the data line, the first electrode, and the second electrode are arranged at the same layer; and the data line and the first electrode are of an integrated structure.

14. The array substrate according to claim 13, further comprising an electrode pattern, wherein the electrode pattern is located on a side of the common electrode away from the thin film transistors and is electrically connected to the common electrode;
the electrode pattern comprises a plurality of first pattern portions and a plurality of second pattern portions; the plurality of first pattern portions extend in the first direction, the plurality of second pattern portions extend in the second direction, the plurality of first pattern portions are arranged at intervals in the second direction, and adjacent first pattern portions of the plurality of first pattern portions are electrically connected through the second pattern portions; and
at least a part of an orthographic projection of the second pattern portions on the base substrate is located outside an orthographic projection of the data lines on the base substrate.

15. The array substrate according to claim 14, further comprising a plurality of gate lines, wherein the plurality of gate lines extend along the first direction, and are arranged at intervals along the second direction, and the plurality of gate lines are each electrically connected to the gate electrode of a corresponding thin film transistor; and
at least a part of an orthographic projection of the first pattern portions on the base substrate is located outside an orthographic projection of the gate lines on the base substrate.

16. The array substrate according to claim 15, wherein in the second direction, the second opening is farther away from a gate line to which the thin film transistor exposed by the first opening is connected than the first opening; and the second opening and the gate line are arranged at intervals.

17. The array substrate according to claim 9, wherein the second electrode comprises an extending portion which extends along the first direction, and the extending portion extends into an area surrounded by the ring shape;
the extending portion comprises a first extending sub-portion and a second extending sub-portion; the first extending sub-portion is exposed by the first opening, the first extending sub-portion is closer to the first electrode than the second extending sub-portion, and an orthographic projection of the first extending sub-portion on the base substrate is within an orthographic projection of the active pattern on the base substrate; and
in the second direction, a size of the first extending sub-portion is smaller than a size of the second extending sub-portion.

18. The array substrate according to claim 17, wherein the second extending sub-portion of the second electrode comprises a body portion and at least one protruding portion; the at least one protruding portion is connected to the body portion, and protruded relative to the body portion in the first direction.

19. The array substrate according to claim 18, wherein the second extending sub-portion comprises two protruding portions which are respectively located on two sides of the body portion;
an interval is existed between an orthographic projection of each of the two protruding portions on a plane and an orthographic projection of the first electrode on the plane, and the plane is perpendicular to the second direction.

20. The array substrate according to claim 1, wherein a minimum distance between the connecting via hole and the second opening is D2, and D2=y²+e²+s²+g²; and
y represents a fluctuation value of the second opening, h represents a fluctuation value of the connecting via hole, s represents an alignment deviation of the second opening, and g represents an alignment deviation of the connecting via hole.

21. The array substrate according to claim 20, wherein the minimum distance D2 between the connecting via hole and the second opening is 1.7 µm to 4.2 µm.

22. The array substrate according to any one of claims 1 to 21, wherein an area of an orthographic projection of the first opening on the base substrate is larger than an area of an orthographic projection of the second opening on the base substrate.

23. The array substrate according to any one of claims 1 to 22, wherein the first opening and the second opening are in communication with each other, and are arranged in the first direction.

24. A display panel, comprising the array substrate according to any one of claims 1 to 23.

25. A display device, comprising the display panel according to claim 24.
